# EUROPÄISCHE PATENTSCHRIFT

(11) **EP 1 053 072 B1**
(45) Veröffentlichungstag und Bekanntmachung des Hinweises auf die Patenterteilung: **05.09.2001**
(21) Anmeldenummer: 99910084.5
(22) Anmeldetag: 27.01.1999
(51) Int. Cl.: B23Q 5/04, F16H 13/08, F16H 13/14, B23B 31/20

(54) **BOHR- BZW. FRÄSKOPF**
DRILL OR MILLING HEAD
TETE DE PERCAGE OU DE FRAISAGE

(30) Priorität: 29.01.1998 DE 19803274
(43) Veröffentlichungstag der Anmeldung: 22.11.2000
(73) Patentinhaber: PMV D.O.O., 4290 Trzic (SI); LPKF Laser & Electronics AG, D-30827 Garbsen/OT Berenbostel (DE)
(72) Erfinder: PODLIPEC, Milan, 1360 Vrhnika (SI); PODLIPEC, Bostjan, 1360 Vrhnika (SI); ZEPIC, Janez, 1113 Ljubljana (SI)
(74) Vertreter: Braun, Dieter, Dipl.-Ing.
(86) Internationale Anmeldenummer: DE9900209
(87) Internationale Veröffentlichungsnummer: WO9938647

(56) Entgegenhaltungen:
- EP-A- 0 118 824
- EP-A- 0 276 085
- EP-A- 0 349 268
- DE-A- 3 434 699
- FR-A- 1 163 949
- GB-A- 115 848
- US-A- 3 244 026
- US-A- 4 296 648
- "Precision ball bearings replace gears in tiny speed reducers" PRODUCT ENGINEERING, Bd. 41, Nr. 26, 7. Dezember 1970, Seite 89 XP002107975 New York (US)
- PATENT ABSTRACTS OF JAPAN vol. 97, no. 11, 28. November 1997 & JP 09 177917 A (NTN CORP), 11. Juli 1997

## Beschreibung

Diese Erfindung betrifft einen Bohr- bzw. Fräskopf mit einer über einen Schnellwechselmechanismus betätigbaren Spannzange und einer mit einem Motor verbundenen Antriebswelle, wobei die Spannzange durch axiales Verschieben gegenüber einer Spannhülse geöffnet und die dazu erforderliche Kraft über eine Reibkupplung übertragen wird, und mit einem Getriebe zum Antrieb der Spannzange. Insbesondere ist dieser Bohr- bzw. Fräskopf für Maschinen geeignet, die zur Herstellung von Feinstrukturen dienen, wie Leiterplattenfräsmaschinen und Graviermaschinen.

In der noch unveröffentlichten Patentanmeldung DE-197 48 735.1 ist ein gattungsgemäßer Bohr- bzw. Fräskopf beschrieben. Bei diesem Bohr- bzw. Fräskopf ist eine Antriebswelle des Motors über eine Kupplung mit einer Antriebswelle der Spannzange verbunden. Somit ist die Drehzahl des eingespannten Werkzeuges stets gleich der Motordrehzahl.

Der Erfindung liegt daher die Aufgabe zugrunde, einen gattungsgemäßen Bohr- bzw. Fräskopf zur Verfügung zu stellen, bei dem die Drehung der Motorantriebswelle mittels eines auf einfachen Mitteln basierenden Getriebes mit einer Übersetzung auf die Antriebswelle der Bohr- bzw. Fräskopfes übertragen werden kann.

Diese Aufgabe wird durch die Merkmale des Anspruchs 1 gelöst. Bei dem erfindungsgemäßen Bohr- bzw. Fräskopf weist der treibende Teil des Getriebes ein Kugellager auf, dessen Kugeln mittels eines auf einer Antriebswelle des Motors befestigten Mitnehmerteils konzentrisch um eine gemeinsame Achse bewegt werden. Die Kugeln sind zwischen zwei konzentrisch bezüglich der Achse ausgerichteten und im Querschnitt kreisförmigen Lagerflächen gelagert und mit diesen zumindest teilweise kraftschlüssig in Eingriff. Eine der Lagerflächen ist um die Achse drehbar, während die andere Lagerfläche festliegt. Ferner sind die Lagerflächen im wesentlichen parallel zur Achse ausgerichtet und in axialer Richtung symmetrisch zueinander konkav gewölbt, wobei die Wölbungsradien gröβer als der Radius der Kugeln sind, und der maximale Abstand der Wölbungen voneinander etwa gleich dem Durchmesser der Kugeln ist. Die Kugeln werden axial von dem Mitnehmerteil mit einer Kraft beaufschlagt.

Das Getriebe basiert auf dem Prinzip, daß die Kugeln sich gleichzeitig relativ zu zwei als Lagerflächen dienenden konzentrischen Umfangsflächen bewegen, die im Querschnitt kreisförmig sind und unterschiedliche Radien aufweisen. Dadurch ergeben sich, entsprechend dem Verhältnis der Radien der Lagerflächen, unterschiedliche Winkelgeschwindigkeiten der Motorantriebswelle und der angetriebenen Lagerfläche.

Auf diese Weise ist ein Bohr- bzw. Fräskopf mit einem Getriebe geschaffen, das platzsparend ist und kaum Abnutzungserscheinungen unterworfen ist. Da es auf einfachen Mitteln basiert, ist das Getriebe zudem kostengünstig herzustellen. Dadurch, daß die Lagerflächen im wesentlichen parallel zur Achse ausgerichtet und in axialer Richtung konkav gewölbt sind, und zwar so, daß die Wölbungen symmetrisch zueinander angeordnet sind, d.h. in bezug auf die durch die Kugeln hindurch verlaufende Drehachse der Kugeln, und ferner die Kugeln axial von dem Mitnehmerteil mit einer Kraft beaufschlagt werden, werden die Kugeln gegen einen Bereich der Wölbungen gepreßt, in dem der Abstand der Wölbungen zueinander geringer ist, als der Durchmesser der Kugeln. Auf diese Weise wird ein kraftschlüssiger Eingriff der Kugeln mit den Lagerflächen erreicht, wodurch eine einfache Form einer Schiupfkupplung gegeben ist.

Dadurch, daß die Lagerflächen konkav gewölbt sind, ist der axiale Weg des Mitnehmerteils besonders kurz, zum Beispiel kürzer als bei den in axialer Richtung konisch verlaufenden Flächen. Aufgrund der Wölbung der Lagerflächen kommen die Kugeln mit den Lagerflächen sehr schnell in Eingriff.

Das Mitnehmerteil kann über eine Feder beaufschlagt sein, die auf der Motorantriebswelle zwischen einem Motorgehäuse und dem Mitnehmerteil befestigt ist. Die Feder nimmt die Gegenkraft beim Einkuppeln auf und bietet gleichzeitig einen Schutz gegen Überlastung aufgrund einer zu hohen Erwärmung der Kugeln bzw. der Laufflächen. Die Federkraft ist beim Zusammenbau des Getriebes entsprechend einzustellen.

Das Getriebe kann sowohl zur Drehzahlerhöhung als auch zur Drehzahlreduzierung verwendet werden. Um eine Drehzahlerhöhung zu erreichen, liegt die Lagerfläche, die den größeren Radius aufweist, fest. Auf diese Weise wird eine Drehung des Teils hervorgerufen, das die Lagerfläche mit dem kleineren Radius bildet. Dieses Teil kann unmittelbar einen Abschnitt der Antriebswelle des Bohr- bzw. Fräskopfes darstellen, oder es kann auch mit dieser Antriebswelle über eine Kupplung verbunden sein.

Die Lagerflächen können durch einen Lagerinnenring bzw. einen Lageraußenring gebildet sein. Dabei kann der Lageraußenring, wenn er festliegt, in einem Gehäuse des Getriebes eingelegt sein. Der Lagerinnenring kann auf dem getriebenen Teil aufgepreßt sein.

Vorzugweise ist das auf der Motorantriebswelle befestigte Mitnehmerteil ein Zahnflansch, dessen Zähne zwischen den Kugeln eingreifen. Dabei kann vorgesehen sein, daß in den Zahnflansch in axialer Richtung Sitze für die Kugeln des Kugellagers eingepreßt sind. Der Zahnflansch ist vorzugsweise aus abriebfestem Material hergestellt, insbesondere eignet sich dazu Sinterbronze, die vorzugsweise ölimprägniert ist.

Die Reibkupplung des Bohr- bzw. Fräskopfes besteht vorzugsweise aus einem axial und relativ zur Antriebswelle des Bohr- bzw. Fräskopfes bewegbaren Teil und einem axial verschiebbaren fest mit der Antriebswelle des Bohr- bzw. Fräskopfes verbundenen Teil, wobei die beiden Teile zueinander konforme Flächen aufweisen, die beim Betätigen des Schneliwechselmechanismus in Kontakt gelangen. Dabei ist vorgesehen, daß die beiden Teile werkzeugseitig gegen die Kraft jeweils einer Feder abgestützt sind. Auf diese Weise ist gewährleistet, daß die beiden Teile im Ruhezustand einen Abstand voneinander aufweisen und beim Zusammenführen, in dem Fall, daß sich das fest mit der Antriebswelle des Bohr- bzw. Fräskopfes verbundene Teil dreht, nur eine Reibung zwischen den Flächen auftritt, die nicht zu einer Beschädigung des Bohr- bzw. Fräskopfes führt.

Gemäß einer bevorzugten Ausgestaltung des Bohr- bzw. Fräskopfes ist das relativ zur Antriebswelle des Bohr- bzw. Fräskopfes bewegbare Teil zylinderförmig und konzentrisch zu dieser Antriebswelle angeordnet und weist am motorseitigen Ende eine ringförmige Schulter auf. Das fest mit der Antriebswelle des Bohr- bzw. Fräskopfes verbundene Teil ist eine Manschette mit einem umlaufenden Ansatz. Die konformen Flächen sind an der ringförmigen Schulter und dem umlaufenden Ansatz plan und vertikal zur Welle ausgebildet.

Dadurch, daß die für das axiale Verschieben der Spannzange erforderliche Kraft über eine Reibkupplung übertragen wird, ist ausgeschlossen, daß eine versehentlich noch rotierende Spannzange beim Öffnen mit einem nicht rotierenden Teil in formschlüssigen Eingriff gelangt. Die axiale Schubkraft wird vielmehr über die Reibkupplung kraftschlüssig auf die Spannzange bzw. die Antriebswelle übertragen, mit der die Spannzange verbunden ist.

Der Schnellwechselmechanismus kann manuell über eine Handhabe betätigbar sein. Dabei kann auch vorgesehen sein, daß die Handhabe in der Stellung, in der die Spannzange geöffnet ist, arretierbar ist. Dies hat den Vorteil, daß der Operateur beide Hände frei hat zum Handhaben des Bohr- bzw. Fräswerkzeuges.

Die Handhabe kann zum Beispiel ein Hebel sein, der einen Griffabschnitt und einen innerhalb eines Gehäuses des Bohr- bzw. Fräskopfes angeordneten Funktionsabschnitt aufweist. Dabei ist vorgesehen, daß dieser Funktionsabschnitt des Hebels in Ruhestellung einen spitzen Winkel zu einer Horizontalebene und in Betätigungsstellung einen rechten Winkel mit der Antriebswelle des Bohr- bzw. Fräskopfes einnimmt und außerdem motorseitig gegen eine unbewegliche Fläche des Bohr- bzw. Fräskopfes und werkzeugseitig gegen das relativ zur Antriebswelle bewegbare Teil anliegt. Der Funktionsabschnitt des Hebels weist in der Betätigungsstellung in Axialrichtung eine größere maximale Ausdehnung auf, als in der Ruhestellung. Dadurch wird erreicht, daß durch das Bewegen des Heibels aus seiner Ruhgestellung in seine Betätigungsstellung das relativ zur Antriebswelle bewegbare Teil der Reibkupplung zum werkzeugseitigen Ende des Bohr- bzw. Fräskopfes hin verschoben wird und dabei, wie unten näher beschrieben wird, die Antriebswelle bzw. Spannzange mitverschoben wird, um so das Öffnen der Spannzange zu bewirken.

Der Funktionsabschnitt des Hebels ist vorzugsweise ringförmig und konzentrisch zur Antriebswelle angeordnet. Wenn der Außendurchmesser des Funktionsabschnitts gleich dem Innendurchmesser des Gehäuses ist und die Außenseite des Funktionsabschnitts konvex gewölbt ist, kann erreicht werden, daß dieser in jeder Lage entlang seines gesamten Umfangs gegen das Gehäuse des Bohr- bzw. Fräskopfes anliegt, abgesehen von einem Bereich, in dem der Griffabschnitt ansetzt. Auf diese Weise ist erreicht, daß der Hebel nur in seiner Winkelstellung zur Antriebswelle verändert und gegebenenfalls zur Arretierung geringfügig um die Axialrichtung des Bohr- bzw. Fräskopfes gedreht werden kann, darüber hinaus aber festliegt. Der Griffabschnitt ragt durch eine Öffnung des Gehäuses.

Die in Abhängigkeit von seiner Stellung veränderbare maximale Ausdehnung des Funktionsabschnittes in Axialrichtung wird vorzugsweise dadurch erreicht, daß auf dem Funktionsabschnitt des Hebels, werkzeugseitig in der zur Längsachse des Hebels senkrechten Ebene, in der in Betätigungsstellung des Hebels die Antriebswelle liegt, beidseitig der Antriebswelle ein Nocken und motorseitig ein weiterer Nocken, gegenüberliegend von dem Griffteil des Hebels angeordnet sind. Die beiden werkzeugseitigen Nocken und der motorseitigen Nocken sind somit um 90° versetzt angeordnet. Daher weist der Funktionsabschnitt in horizontaler Lage, also in Betätigungsstellung, eine größere axiale Ausdehnung auf, als in der geneigten Lage der Ruhestellung.

Die beiden werkzeugseitigen Nocken drücken beim Bewegen des Hebels aus seiner Ruhestellung in seine Betätigungsstellung gegen eine Anschlagfläche des in Axialrichtung relativ zur Antiebswelle bewegbaren Teiles. Dieses bewegt sich dann gegen die fest mit der Antriebswelle verbundene Manschette. Durch Betätigung des Hebels wird somit die Antriebswelle zum werkzeugseitigen Ende des Bohr- bzw. Fräskopfes hin verschoben. Mit der Antriebswelle wird auch die Spannzange relativ zu der Spannhülse verschoben. Dadurch öffnet sich die Spannzange, deren Greifarme im Endabschnitt der Spannhülse gegen eine sich in Axialrichtung zum Motor hin konisch verjüngende Innenfläche der Spannhülse anliegen.

Der Schnellwechselmechanismus kann auch pneumatisch betätigbar sein.

Es kann vorgesehen sein, daß, um eine einfache Trennung von Motor und Bohr- bzw. Fräskopf zu ermöglichen, das Getriebe und die Antriebswelle des Bohr- bzw. Fräskopfes über eine Kupplung miteinander verbunden sind. Vorzugsweise handelt es sich bei dieser Kupplung um eine elastische Kupplung, damit Schwingungen in Axialrichtung aufgefangen werden.

Bei Bedarf kann der Bohr- bzw. Fräskopf über die Kupplungsscheibe sehr einfach mit unterschiedlichen Motoren verbunden werden. Es ergibt sich eine modulare Bauweise eines Bohr- bzw. Fräskopfes, der eine völlig selbständige Einheit mit dem Mechanismus für einen schnellen und sicheren Werkzeugwechsel darstellt.

Es kann erfindungsgemäß auch vorgesehen sein, daß zwei oder mehrere funktionsmäßig verbundene Getriebe der beschriebenen Art hintereinander angeordnet sind. Dabei greift dann das getriebene Teil des ersten Getriebes zwischen die Kugeln des zweiten Getriebes. Auf diese Weise kann beispielsweise die Drehzahl der Antriebswelle des Bohr- bzw. Fräskopfes weiter erhöht werden.

Im folgenden wird der erfindungsgemäße Bohr- bzw. Fräskopf anhand eines Ausführungsbeispiels näher erläutert. Dabei wird auf die Zeichnungen Bezug genommen. Es zeigen:
Figur 1, eine Schnittansicht eines Bohr- bzw. Fräskopfes;
Figur 2, das Getriebe des Bohr- bzw. Fräskopfes der Figur 1 in detaillierter Darstellung;
Figur 3, die Lagerung einer der Kugeln des Kugellagers in vergrößerter Darstellung;
Figur 4, eine Draufsicht auf einen Zahnflansch;
Figur 5, eine Schnittansicht des Zahnflansches der Figur 4;
Figur 6, den Zahnflansch der Figuren 4 und 5 in perspektivischer Ansicht;
Figur 7, das Prinzip der Drehzahlerhöhung mittels des Getriebes;
Figur 8, eine Schnittansicht des Gehäuses des Bohr- bzw. Fräskopfes, das eine Arretiervorrichtung einer Handhabe für den Schnellwechselmechanismus aufweist.

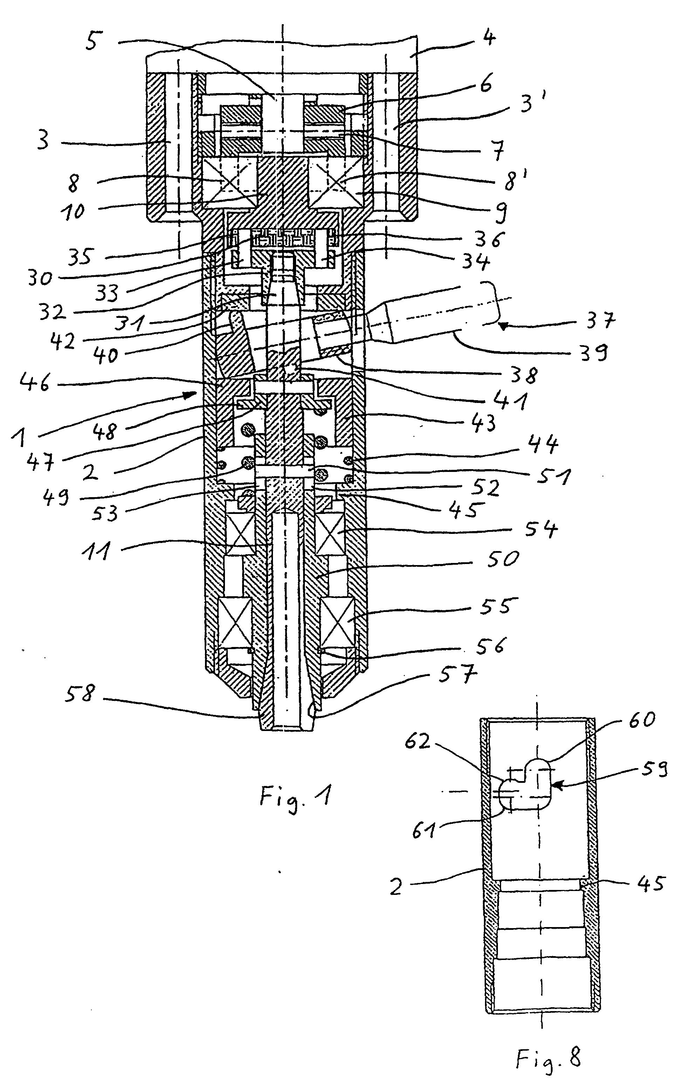

Der in Figur 1 dargestellte Bohr- bzw. Fräskopf 1 weist ein Gehäuse 2 auf, das über zwei Schrauben 3 und 3' mit einem nur schematisch angedeuteten Antriebsmotor 4 verbunden ist. Der Motor 4 weist eine Antriebswelle 5 auf.

Auf der Antriebswelle 5 ist ein Zahnflansch 6 aus ölimprägnierter Sinterbronze mittels eines Stiftes 7 befestigt. Die Zähne 8 und 8' des Zahnflansches 6 greifen in ein Kugellager 9 ein. Das Kugellager 9 ist zwischen dem Gehäuse 2 des Bohr- bzw. Fräskopfes 1 und dem getriebenen Teil 10 des Getriebes angeordnet. Das getriebene Teil 10 treibt über eine Antriebswelle 31 des Bohr- bzw. Fräskopfes 1 eine Spannzange 11 an. Bevor dieser Antriebsmechanismus beschrieben wird, wird zunächst das Getriebe näher erläutert.

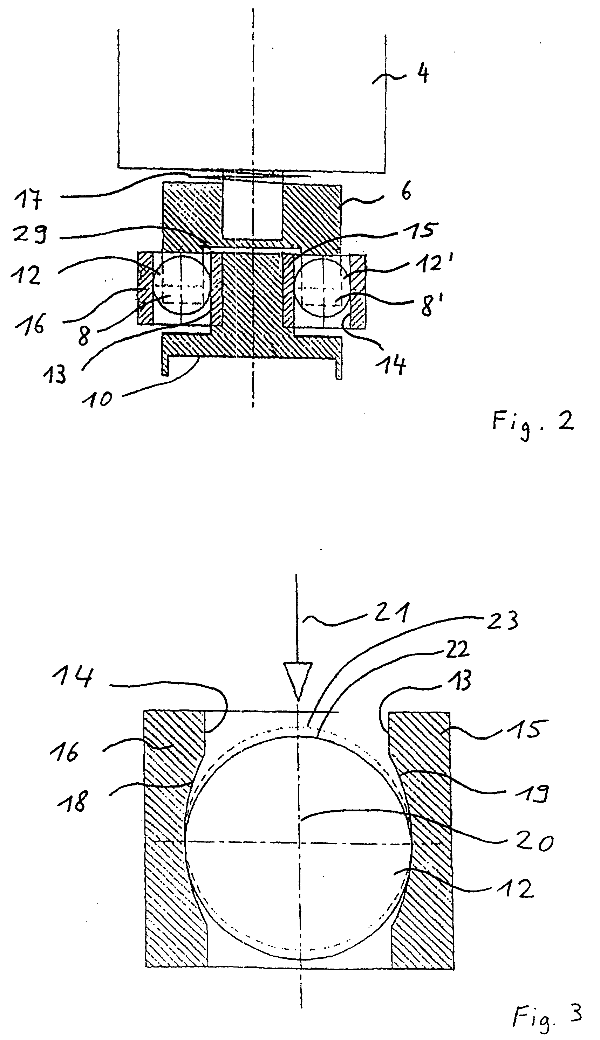

Wie in Figur 2 detailliert dargestellt ist, sind die Kugeln 12 und 12' des Kugellagers 9 zwischen einer inneren Lagerfläche 13 und einer äußeren Lagerfläche 14 gelagert. Die innere Lagerfläche 13 wird durch einen Lagerinnenring 15 gebildet, die äußere Lagerfläche 14 durch einen Lageraußenring 16. Der Lagerinnenring 15 ist auf dem getriebenen Teil 10 des Getriebes aufgepreßt. Der Lageraußenring 16 ist in dem Gehäuse 2 des Bohr- bzw. Fräskopfes 1 eingelegt.

Zwischen dem Zahnflansch 6 und dem Motor 4 ist eine Feder 17 angeordnet, über die der Zahnflansch 6 axial mit einer Kraft beaufschlagt wird.

Die innere Lagerfläche 13 und die äußere Lagerfläche 14 sind in Figur 3 zusammen mit einer Kugel 12 des Kugellagers 9 vergrößert dargestellt. Die beiden Lagerflächen 13, 14 weisen jeweils eine konkave Wölbung 18 bzw. 19 auf. Die Wölbungen 18, 19 erstrecken sich in axialer Richtung über eine Länge, die etwas größer als der Durchmesser der Kugel 12 ist. Die beiden Wölbungen 18, 19 sind in bezug auf die durch die Kugel 12 verlaufende Achse 20 symmetrisch zueinander angeordnet. Der maximale Abstand der Wölbungen 18, 19 voneinander ist gleich dem Durchmesser der Kugel 12. Dieser Abstand besteht zwischen den Zentren der Wölbungen 18, 19.

Eine axiale Kraft, die durch den Pfeil 21 angedeutet ist, kann über den Zahnflansch 6 (in Figur 3 nicht gezeigt) auf die Kugel 12 ausgeübt werden. Je nach der ausgeübten Kraft 21 nimmt die Kugel 12 verschiedene axial verschobene Positionen 22 bzw. 23 ein, die in Figur 3 durch eine ausgezogene Linie 22 bzw. eine gestrichelte Linie 23 dargestellt sind.

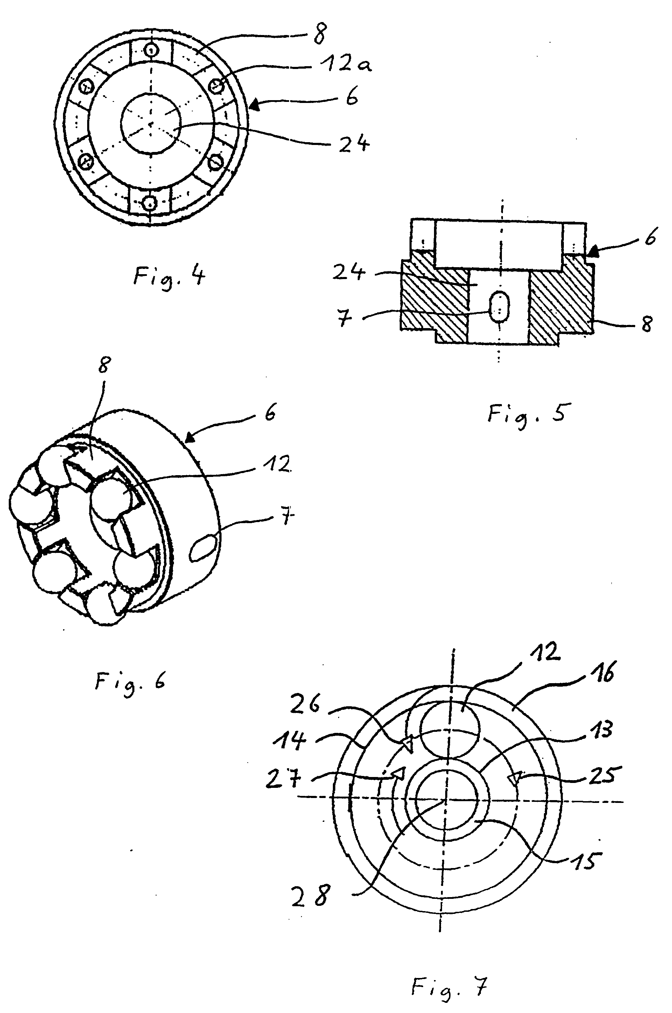

In den Figuren 4, 5 und 6 ist die Struktur des Zahnflansches 6 detailliert dargestellt. Der Zahnflansch 6 weist eine Bohrung 24 auf, in die die Antriebswelle 5 des Motors 4 eingreift. Mit dem senkrecht zur Antriebswelle 5 verlaufenden Stift 7 ist der Zahnflansch 6 auf der Antriebswelle 5 befestigt. Der Zahnflansch 6 weist einen kreisförmigen Querschnitt auf, wobei auf seinem Umfang sechs Zähne 8 angeordnet sind. Zwischen den Zähnen 8 befinden sich Sitze 12a für die Kugeln 12. Die Sitze 12a sind in axialer Richtung des Zahnflansches 6 eingepreßt und weisen eine Tiefe von ca. 0,2 mm und einen Durchmesser von ca. 1,5 mm auf.

in Figur 7 ist das Funktionsprinzip des Getriebes näher erläutert, und zwar für den Anwendungsfall einer Drehzahlerhöhung. Die Kugel 12 wird durch den Zahnflansch 6 (in Figur 6 nicht gezeigt) in Richtung des Pfeils 25 gedreht. Dabei läuft die Kugel 12 auf der äußeren Lagerfläche 14, die durch den festliegenden Lageraußenring 16 gebildet ist. Der Lagerinnenring 15 hingegen ist drehbar gelagert. Aufgrund der durch den Pfeil 26 angedeuteten Eigendrehbewegung der Kugel 12 und eines kraftschlüssigen Eingriffs der Kugel 12 mit dem Lagerinnenring 15 dreht sich dieser in die Richtung des Pfeils 27. Die Winkelgeschwindigkeit der Drehbewegung der Kugel 12 um die Achse 28 ist gleich der Winkelgeschwindigkeit des Zahnflansches 6 bzw. der Antriebswelle 5 des Motors 4. Die Winkelgeschwindigkeit des Lagerinnenrings 15 ist jedoch höher, und zwar um einen Faktor, der gleich dem Verhältnis des Radius des Lageraußenrings 16 zu dem Radius des Lagerinnenrings 15 ist.

Der kraftschlüssige Eingriff der Kugel 12 mit den Lagerflächen 13, 14 wird durch die axiale Krafteinwirkung 21 erreicht, die über den Motor 4 und die Feder 17 auf den Zahnflansch 6 ausgeübt wird, der wiederum auf die Kugeln 12 des Kugellagers 9 drückt. Dabei wird der Lagerluftspalt 29 (siehe Figur 2) entsprechend verringert. Durch den kraftschlüssigen Eingriff drehen sich die Kugeln 12, in der Regel einhergehend mit dem Auftreten eines anfänglichen Schlupfes, sowohl um die eigene Achse als auch um die Achse des getriebenen Teils 10 des Getriebes. Der Lagerinnenring 15 wird dabei mitgedreht, und da er fest mit dem getriebenen Teil 10 dies Getriebes verbunden ist, wird auch dieses gedreht.

Aufgrund der Kugelsitze 12a ist eine Nachjustierung der Feder 17 während des Betriebes nicht erforderlich.

Mit dem Getriebe ist es somit möglich, auf einfache Weise eine Drehzahlerhöhung zu erreichen. Es ist aber auch möglich, das Getriebe in umgekehrter Weise für eine Drehzahlreduzierung einzusetzen. In einem solchen Fall muß der Lagerinnenring 15 festliegen, während der Lageraußenring 16 drehbar gelagert sein muß.

Im folgenden wird der Antriebsmechanismus des Bohr- bzw. Fräskopfes 1 beschrieben und ein Mechanismus für einen schnellen und sicheren Werkzeugwechsel.

Das getriebene Teil 10 des Getriebes enthält eine elastische Kupplungsscheibe 30. Der Kupplungsscheibe 30 liegt ein auf der Antriebswelle 31 des Bohr- bzw. Fräskopfes 1 befestigter tellerartiger Aufsatz 32 gegenüber, der zusammen mit dem getriebenen Teil 10 des Getriebes und zwei Verbindungsstiften 33 und 34 eine Kupplung zwischen dem getriebenen Teil 10 des Getriebes und der Antriebswelle 31 des Bohr- bzw. Fräskopfes 1 bildet. Die Verbindungsstifte 33 und 34 sind in dem Aufsatz 32 der Antriebswelle 31 des Bohr- bzw. Fräskopfes 1 befestigt und greifen in Vertiefungen der Kupplungsscheibe 30 ein.

Ferner weist der Bohr- bzw. Fräskopf einen Hebel 37 mit einem innerhalb des Gehäuses 2 angeordneten Funktionsabschnitt 38 und einem aus dem Gehäuse 2 herausragenden Griffabschnitt 39 auf. Der Funktionsabschnitt 38 ist ringförmig und konzentrisch zur Antriebswelle 31 des Bohr- bzw. Fräskopfes 1. Der Funktionsabschnitt 38 weist einen solchen Durchmesser auf und ist an der Außenseite derart konvex gewölbt, daß er in jeder Lage bis auf einen Bereich, in dem der Griffabschnitt 39 ansetzt, entlang des gesamten Umfangs gegen das Gehäuse 2 des Bohr- bzw. Fräskopfes 1 anliegt. Auf der dem Motor 4 zugewandten Seite des Funktionsabschnittes 38 ist ein Nocken 40 angeordnet. Auf der gegenüberliegenden Seite des Funktionsabschnittes 38 sind zwei weitere Nocken 41 angeordnet, von denen nur einer gezeigt ist. Diese beiden Nocken 41 liegen in der um 90° zur Schnittebene um die Antriebswelle 31 gedrehten Ebene. Motorseitig liegt der Funktionsabschnitt 38 gegen einen festliegenden Ring 42 an, werkzeugseitig gegen ein zylinderförmiges, in Axialrichtung bewegbares Teil 43, das werkzeugseitig durch eine Feder 44 gegen einen Vorsprung 45 des Gehäuses 2 abgestützt ist. An dem dem Motor 4 zugewandten Ende weist das Teil 43 eine ringförmige Schulter 46 auf, die einen rechten Winkel mit der Wandung des Teils 43 einnimmt.

Eine Manschette 47 mit einem umlaufenden Ansatz 48 ist fest mit der Antriebswelle 31 verbunden. Der Ansatz 48 ist parallel zu der Schulter 46 ausgerichtet und so dimensioniert, daß die sich gegenüberliegenden planen Flächen der Schulter 46 und des Ansatzes 48 bei einer Verschiebung des Teiles 43 zum werkzeugseitigen Ende des Bohr- bzw. Fräskopfes 1 in Kontakt gelangen. Die Manschette 47 ist werkzeugseitig durch eine Feder 49 gegen eine Spannhülse 50 abgestützt. Die Spannhülse 50 umschließt einen Abschnitt der Antriebswelle 31 und, bis auf einen kleinen Endbereich, die gesamte Spannzange 11, in die die Antriebswelle 31 übergeht. Ein quer durch die Antriebswelle 31 hindurch verlaufender Stift 51 ragt beidseitig der Antriebswelle 31 in jeweils ein parallel zur Antriebswelle 31 verlaufendes Langloch 52 bzw. 53 der Spannhülse 50.

Die Spannhülse 50 ist mittels zweier Drehlager 54 und 55 gelagert und gegen ein axiales Verschieben durch einen Spannring 56 gesichert. Die Spannhülse 50 weist in ihrem Endabschnitt eine sich in Axialrichtung zum Motor 4 hin konisch verjüngende Innenfläche 57 auf. Gegen diese Innenfläche 57 liegen Greifarme 58 der Spannzange 11 an, wenn diese geschlossen ist.

Wie in Figur 8 gezeigt ist, ist bei dieser Ausführungsform eine Arretierung des Hebels 37 in seiner Betätigungsstellung, also im geöffneten Zustand der Spannzange 11, vorgesehen. Dazu ist eine im wesentlichen rechtwinkelig geformte Öffnung 59 für den Hebel 37 in dem Gehäuse 2 vorgesehen, wobei ein Schenkel 60 in Axialrichtung ausgerichtet ist.

Durch den zweiten Schenkel 61, der an seinem äußeren Ende eine in der Richtung des Schenkels 60 liegende Ausbuchtung 62 aufweist, ist eine Raste für den Hebel 37 gegeben.

Wenn in den Bohr- bzw. Fräskopf 1 ein Werkzeug (nicht gezeigt) eingespannt ist, befindet sich der Hebel 37 in seiner in Figur 1 gezeigten Ruhestellung. in dieser Stellung, in der der Funktionsabschnitt 38 des Hebels 37 seine geringste axiale Ausdehnung aufweist, wird er durch die durch das zylinderförmige Teil 43 übertragene Kraft der Feder 44 gehalten. Wird der Hebel 37 in seine horizontale Lage bewegt, so vergrößtert sich die axiale Ausdehnung des Funktionsabschnitts 38, wodurch das bewegbare Teil 43 zum werkzeugseitigen Ende des Bohr- bzw. Fräskopfes 1 hin verschoben wird. Dabei gelangen die beiden sich gegenüberliegenden planen Flächen der Schulter 46 und des Ansatzes 48 in Kontakt, so daß auch die Manschette 47 verschoben wird. Da diese fest mit der Antriebswelle 31 verbunden ist, bewegen sich auch die Antriebswelle 31 und die Spannzange 11, die unmittelbar an die Antriebswelle 31 anschließt, zum werkzeugseitigen Ende des Bohr- bzw. Fräskopfes 1 hin. Infolge der sich daraus ergebenden Verschiebung der Spannzange 11 gegenüber der in Axialrichtung festliegenden Spannhülse 50 wird der kraftschlüssige Eingriff der konischen Innenfläche 57, der Spannhülse 50 und der Greifarme 58 der Spannzange 11 aufgehoben, wodurch das von den Greifarmen 58 gehaltene Werkzeug freigegeben wird.

Der Stift 51 und die Langlöcher 52 und 53 stellen eine Mitnehmervorrichtung dar, durch die erreicht wird, daß sich die Spannhülse 50 stets mit der Antriebswelle 31 mitdreht, also keine Reibung zwischen diesen beiden Teilen auftritt. Durch die Langlöcher 52 und 53 ist sichergestellt, daß sich dabei die Antriebswelle 31 gegenüber der Spannhülse 50 axial verschieben kann.

Beim Bewegen des Hebels 37 in seine Betätigungsstellung bewegen sich auch die Verbindungsstifte 33 und 34 der Kupplung zwischen dem getriebenen Teil 10 des Getriebes und der Antriebswelle 31 in die Richtung des werkzeugseitigen Endes des Bohr- bzw. Fräskopfes 1. Jedoch gelangen diese dabei nicht vollständig aus den Vertiefungen 35 und 36, so daß nicht ausgekuppelt wird.

Zum Arretieren wird der Hebel 37 in seiner Betätigungsstellung geringfügig um die Axialrichtung des Bohr- bzw. Fräskopfes 1 gedreht, so daß er von der Ausbuchtung 62 aufgenommen und gehalten wird.

Wenn der Motor 4 vor dem Betätigen des Hebels 37 versehentlich nicht abgeschaltet wurde, kann dennoch keine Beschädigung des Bohr- bzw. Fräskopfes 1 auftreten bzw. keine Verletzungsgefahr für Personen entstehen, da die Kontaktflächen des zylinderförmigen Teiles 43 und der Manschette 47 für die dann entstehende Reibungswärme ausgelegt sind und sich die Spannzange 11 nicht von der Antriebswelle 31 lösen kann.

## Patentansprüche

1. Bohr- bzw. Fräskopf (1), insbesondere für Leiterplattenfräsmaschinen und Graviermaschinen, mit einer über einen Schnellwechselmechanismus betätigbaren Spannzange (11) und einer mit einem Motor (4) verbundenen Antriebswelle (31), wobei die Spannzange (11) durch axiales Verschieben gegenüber einer Spannhülse (50) geöffnet und die dazu erforderliche Kraft über eine Reibkupplung (43, 47) übertragen wird, und mit einem Getriebe zum Antrieb der Spannzange (11), **dadurch gekennzeichnet**, daß der treibende Teil des Getriebes ein Kugellager (9) aufweist, dessen Kugeln (12, 12') mittels eines auf einer Motorantriebswelle (5) befestigten Mitnehmerteils (6) konzentrisch um eine gemeinsame Achse bewegt werden, wobei die Kugeln (12, 12') zwischen zwei konzentrisch bezüglich der Achse ausgerichteten und im Querschnitt kreisförmigen Lagerflächen (13, 14) gelagert und zumindest zeitweise mit den Lagerflächen (13, 14) kraftschlüssig in Eingriff sind, von denen eine um die Achse drehbar ist, während die andere Lagerfläche festliegt, und wobei die Lagerflächen (13, 14) im wesentlichen parallel zur Achse ausgerichtet und in axialer Richtung symmetrisch zueinander konkav gewölbt sind, die Wölbungsradien gröβer als der Radius der Kugeln (12, 12') sind, der maximale Abstand der Wölbungen (18, 19) voneinander gleich dem Durchmesser der Kugeln (12, 12') ist und die Kugeln (12, 12') axial von dem Mitnehmerteil (6) mit einer Kraft (21) beaufschlagt werden.

2. Bohr- bzw. Fräskopf nach Anspruch 1, **dadurch gekennzeichnet**, daß das Mitnehmerteil (6) über einen auf der Antriebswelle (5) befestigte, zwischen einem Antriebsmotorgehäuse und dem Mitnehmerteil (6) angeordnete Feder (17) beaufschlagt ist.

3. Bohr- bzw. Fräskopf nach Anspruch 1 oder 2, **dadurch gekennzeichnet**, daß die Lagerfläche (14) mit dem größeren Radius festliegt.

4. Bohr- bzw. Fräskopf nach einem der vorhergehenden Ansprüche, **dadurch gekennzeichnet**, daß die Lagerflächen (13, 14) durch einen Lagerinnenring (15) bzw. durch einen Lageraußenring (16) gebildet sind.

5. Bohr- bzw. Fräskopf nach Anspruch 3 und 4, **dadurch gekennzeichnet**, daß der Lageraußenring (16) in einem Gehäuse (2) des Bohr- bzw. Fräskopfes eingelegt ist.

6. Bohr- bzw. Fräskopf nach Anspruch 3, 4 und gegebenenfalls 5, **dadurch gekennzeichnet**, daß der Lagerinnenring (15) auf den getriebenen Teil aufgepreßt ist.

7. Bohr- bzw. Fräskopf nach einem der vorhergehenden Ansprüche, **dadurch gekennzeichnet**, daß das auf der Motorantriebswelle (5) befestigte Mitnehmerteil ein Zahnflansch (6) ist, dessen Zähne (8, 8') zwischen den Kugeln (12, 12') eingreifen.

8. Bohr- bzw. Fräskopf nach Anspruch 7, **dadurch gekennzeichnet**, daß der Zahnflansch (6) in axialer Richtung eingepreßte Sitze (12a) für die Kugeln (12) aufweist.

9. Bohr- bzw. Fräskopf nach einem der vorhergehenden Anspürche, **dadurch gekennzeichnet**, daß das Mitnehmerteil (6) aus ölimprägnierter Sinterbronze hergestellt ist.

10. Bohr- bzw. Fräskopf nach einem der vorhergehenden Ansprüche, **dadurch gekennzeichnet**, daß die Reibkupplung aus einem axial und relativ zur Antriebswelle (31) des Bohr- bzw. Fräskopfes bewegbaren Teil (43) und einem axial verschiebbaren, fest mit der Antriebswelle (31) verbundenen Teil (47) besteht, wobei die beiden Teile zueinander konforme, in Kontakt gelangende Flächen aufweisen und werkzeugseitig gegen die Kraft jeweils einer Feder (44, 49) abgestützt sind.

11. Bohr- bzw. Fräskopf nach Anspruch 10, **dadurch gekennzeichnet**, daß das relativ zur Antriebswelle (31) bewegbare Teil (43) zylinderförmig und konzentrisch zur Antriebswelle (31) angeordnet ist und am motorseitigen Ende eine ringförmige Schulter (48) aufweist, sowie, daß das fest mit der Antriebswelle (31) verbundene Teil von einer Manschette (47) mit einem umlaufenden Ansatz (48) gebildet ist und die konformen Flächen plan und vertikal zur Antriebswelle (31) ausgebildet sind.

12. Bohr- bzw. Fräskopf nach einem der vorhergehenden Ansprüche, **dadurch gekennzeichnet**, daß der Schnellwechselmechanismus eine Handhabe (37) zur Betätigung aufweist.

13. Bohr- bzw. Fräskopf nach einem der Ansprüche 1 bis 11, **dadurch gekennzeichnet**, daß der Schnellwechselmechanismus pneumatisch betätigbar ist.

14. Bohr- bzw. Fräskopf nach einem der vorhergehenden Ansprüche, **dadurch gekennzeichnet**, daß die Antriebswelle (31) des Bohr- bzw. Fräskopfes (1) über eine elastische Kupplungsscheibe (30) mit der Motorantriebswelle (5) verbunden werden kann, derart, daß der Bohr- bzw. Fräskopf (1) eine selbständige Einheit mit dem Mechanismus für den Werkzeugwechsel bildet.

15. Bohr- bzw. Fräskopf nach Anspruch 14, **dadurch gekennzeichnet**, daß der Bohr- bzw. Fräskopf (1) über die Kupplungsscheibe (30) mit unterschiedlichen Motoren (4) verbunden werden kann.

## Claims

1. A boring or milling head (1), especially for circuit board milling machines and engraving machines, with a chuck (11) actuated by a quick release mechanism and a drive shaft joined (31) to a motor (4), whereby the chuck (11) is opened by axial sliding against a chuck sleeve (50) and the necessary force for this is transmitted via a friction coupling (43, 47) and with a gearbox to drive the chuck (11), **characterised in that** the driving part of the gearbox has a ball bearing (9), whose balls (12, 12') are moved concentrically about a common axis by means of a coupling part (6) fastened on a motor drive shaft (5), whereby the balls (12, 12'), carried between two bearing surfaces (13, 14), concentrically aligned with reference to the axis and circular in cross section, are in at least periodic frictional engagement with the bearing surfaces (13, 14), of which one is rotatable about the axis, whilst the other bearing surface is fixed, and whereby the bearing surfaces (13, 14) are directed essentially parallel to the axis and are curved concave symmetrically to each other in the axial direction, the radii of curvature are greater than the radius of the balls (12, 12'), the maximum separation of the curves (18, 19) from each other is equal to the diameter of the balls (12, 12') and the balls (12, 12') are subjected axially to a force (21) from the coupling part (6).

2. A boring or milling head according to Claim 1, **characterised in that** the coupling part (6) is loaded by a spring (17) fastened onto the drive shaft (5), arranged between the drive motor housing and the coupling part (6).

3. A boring or milling head according to Claim 1 or Claim 2, **characterised in that** the bearing surface (14) is set at the greater radius.

4. A boring or milling head according to one of the foregoing Claims, **characterised in that** the bearing surfaces (13, 14) are formed by an inner bearing ring (15) and by an outer bearing ring (16).

5. A boring or milling head according to Claim 3 and Claim 4, **characterised in that** the outer bearing ring (16) is inserted into a housing (2) of the boring or milling head.

6. A boring or milling head according to Claims 3, 4, and possibly Claim 5, **characterised in that** the inner bearing ring (15) is pressed against the driven part.

7. A boring or milling head according to one of the foregoing Claims, **characterised in that** the coupling part (6) fastened on the motor drive shaft (5) is a toothed flange (6), whose teeth (8, 8') engage between the balls (12, 12').

8. A boring or milling head according to Claim 7, **characterised in that** the toothed flange (8) has pressed-in seatings (12a) for the balls (12).

9. A boring or milling head according to one of the foregoing Claims, **characterised in that** the coupling part (6) is manufactured from oil impregnated sintered bronze.

10. A boring or milling head according to one of the foregoing Claims, **characterised in that** the frictional coupling comprises an part (43), axially movable and relative to the drive shaft (31) of the boring and milling head and an axially movable part (47) firmly fixed to the drive shaft (31), whereby the two parts have matching surfaces coming into contact and are each supported on the tool side against the force of a spring (44, 49).

11. A boring or milling head according to Claim 10, **characterised in that** the part (43), movable relative to the drive shaft (31), is cylindrical in shape and arranged concentrically with the drive shaft (31) and has a ring-shaped shoulder (48) at the end on the motor side and that the part firmly fixed to the drive shaft (31) is formed from a sleeve (47) with a circumferential attachment (48) and the conforming surfaces are constructed flat and perpendicular to the drive shaft (31).

12. A boring or milling head according to one of the foregoing Claims, **characterised in that** the quick exchange mechanism has a handle (37) for operation.

13. A boring or milling head according to one of the Claims 1 to 11, **characterised in that** the quick exchange mechanism can be operated pneumatically.

14. A boring or milling head according to one of the foregoing Claims, **characterised in that** the drive shaft (31) of the boring or milling head (1) can be connected to the motor drive shaft (5) via an elastic coupling disc (30), such that the boring or milling head (1) forms an independent unit with the mechanism for tool exchange.

15. A boring or milling head according to Claim 14, **characterised in that** the boring or milling head (1) can be connected to different motors (4) via the coupling disc (30).

## Revendications

1. Tête de perçage ou bien de fraisage (1), notamment pour des machines à fraiser des plaquettes à circuit imprimé et des machines à graver, comportant une pince de serrage (11), qui peut être actionnée par l'intermédiaire d'un mécanisme de changement rapide, et un arbre d'entraînement (31), relié à un moteur (4), la pince de serrage (11) étant ouverte par un déplacement axial par rapport à une douille de serrage (50) et la force requise pour ce faire étant transmise par l'intermédiaire d'un dispositif d'accouplement à friction (43, 47), et comportant un engrenage pour l'entraînement de la pince de serrage (11), **caractérisée en ce que** la partie menante de l'engrenage présente un roulement à billes (9) dont les billes (12, 12') sont déplacées de manière concentrique autour d'un axe commun à l'aide d'un élément entraîneur (6) fixé sur un arbre de commande (5) du moteur, les billes (12, 12') étant logées entre deux surfaces d'appui (13, 14) de section transversale circulaire et situées de manière concentrique par rapport à l'axe, et les billes étant en contact, sous l'action d'une force, avec les surfaces d'appui (13, 14) du moins de façon temporaire, l'une de ces surfaces pouvant tourner autour de l'axe tandis que l'autre surface d'appui demeure immobile, et les surfaces d'appui (13, 14) étant situées sensiblement parallèlement à l'axe et présentant une courbure concave de manière symétrique l'une par rapport à l'autre dans le sens axial, les rayons de courbure étant plus grands que le rayon des billes (12, 12'), la distance maximale entre les courbures (18, 19) étant égale au diamètre des billes (12, 12') et les billes (12, 12') étant sollicitées axialement par une force (21) appliquée par l'élément entraîneur (6).

2. Tête de perçage ou bien de fraisage selon la revendication 1, **caractérisée en ce que** l'élément entraîneur (6) est sollicité par l'intermédiaire d'un ressort (17), fixé sur l'arbre de commande (5) et placé entre un carter de moteur de commande et l'élément entraîneur (6) .

3. Tête de perçage ou bien de fraisage selon la revendication 1 ou 2, **caractérisée en ce que** c'est la surface d'appui (14), qui a le plus grand rayon, qui reste fixe.

4. Tête de perçage ou bien de fraisage selon l'une des revendications précédentes, **caractérisée en ce que** les surfaces d'appui (13, 14) sont constituées respectivement par une bague intérieure de roulement(15) et par une bague extérieure de roulement (16).

5. Tête de perçage ou bien de fraisage selon les revendications 3 et 4, **caractérisée en ce que** la bague extérieure de roulement (16) est insérée dans une enveloppe (2) de la tête de perçage ou bien de fraisage.

6. Tête de perçage ou bien de fraisage selon les revendications 3, 4 et, le cas échéant, la revendication 5, **caractérisée en ce que** la bague intérieure de roulement (15) est engagée par pression sur la partie menée.

7. Tête de perçage ou bien de fraisage selon l'une des revendications précédentes, **caractérisée en ce que** l'élément entraîneur, fixé sur l'arbre de commande (5) du moteur, est une bride dentée (6) dont les dents (8, 8') pénètrent entre les billes (12, 12').

8. Tête de perçage ou bien de fraisage selon la revendication 7, **caractérisée en ce que** la bride dentée (6) présente des sièges (12a), en renfoncement dans le sens axial, pour les billes (12).

9. Tête de perçage ou bien de fraisage selon l'une des revendications précédentes, **caractérisée en ce que** l'élément entraîneur (6) est fabriqué en bronze fritté, imprégné d'huile.

10. Tête de perçage ou bien de fraisage selon l'une des revendications précédentes, **caractérisée en ce que** le dispositif d'accouplement à friction consiste en un élément (43) mobile axialement et relativement à l'arbre d'entraînement (31) de la tête de perçage ou bien de fraisage, et en un élément (47) qui peut être déplacé axialement et qui est solidaire de l'arbre d'entraînement (31), les deux éléments présentant des surfaces dont les formes concordent et qui viennent en contact mutuel, tandis qu'ils sont soutenus, du côté outil, contre la force de chaque fois un ressort (44, 49).

11. Tête de perçage ou bien de fraisage selon la revendication 10, **caractérisée en ce que** l'élément (43) mobile relativement à l'arbre d'entraînement (31) est de forme cylindrique et est placé de manière concentrique par rapport à l'arbre d'entraînement (31), et en ce qu'il présente, au niveau de son extrémité du côté moteur, un épaulement annulaire (48), ainsi qu'en ce que l'élément relié de manière solidaire à l'arbre d'entraînement (31) est constitué par une manchette (47) comportant un rebord (48) tout autour, les surfaces concordantes étant réalisées planes et verticalement par rapport à l'arbre d'entraînement (31).

12. Tête de perçage ou bien de fraisage selon l'une des revendications précédentes, **caractérisée en ce que** le mécanisme de changement rapide présente une manette (37) pour l'actionnement.

13. Tête de perçage ou bien de fraisage selon l'une des revendications 1 à 11, **caractérisée en ce que** le mécanisme de changement rapide peut être actionné de façon pneumatique.

14. Tête de perçage ou bien de fraisage selon l'une des revendications précédentes, **caractérisée en ce que** l'arbre d'entraînement (31) de la tête de perçage ou bien de fraisage (1) peut être relié à l'arbre de commande (5) du moteur par l'intermédiaire d'un disque d'accouplement (30) élastique de telle sorte que la tête de perçage ou bien de fraisage (1) puisse constituer, avec le mécanisme de changement rapide, une unité indépendante pour le changement d'outil.

15. Tête de perçage ou bien de fraisage selon la revendication 14, **caractérisée en ce que** la tête de perçage ou bien de fraisage (1) peut être reliée, par l'intermédiaire du disque d'accouplement (30), à différents moteurs (4).
